# EUROPEAN PATENT SPECIFICATION

(11) **EP 3 249 199 B1**
(45) Date of publication and mention of the grant of the patent: **23.12.2020**
(21) Application number: 17172882.7
(22) Date of filing: 24.05.2017
(51) Int. Cl.: F02C 7/04, G01K 13/02, F02C 9/28, G01K 7/42

(54) **GAS TURBINE ENGINE INLET TEMPERATURE SENSOR CONFIGURATION AND CORRESPONDING METHOD**
GASTURBINENTRIEBWERKEINLASSTEMPERATURSENSORKONFIGURATION SOWIE DAZUGEHÖRIGES VERFAHREN
CONFIGURATION DE CAPTEUR DE TEMPÉRATURE D'ADMISSION DE MOTEUR À TURBINE À GAZ ET PROCÉDÉ CORRESPONDANT

(30) Priority: 24.05.2016 US 201615162727
(43) Date of publication of application: 29.11.2017
(73) Proprietor: United Technologies Corporation, Farmington, CT 06032 (US)
(72) Inventor: FEULNER, Matthew R., West Hartford, CT Connecticut 06119 (US)
(74) Representative: Dehns

(56) References cited:
- EP-A1- 3 139 143
- WO-A1-2014/100081
- US-A- 5 080 496
- US-A1- 2011 077 895
- US-B2- 7 974 812

## Description

### TECHNICAL FIELD

The present disclosure relates generally to configurations of gas turbine engines, and more specifically to an inlet temperature sensor configuration in a gas turbine engine.

### BACKGROUND

Gas turbine engines utilize a compressor to compress air, a combustor to mix the compressed air with a fuel and ignite the mixture, and a turbine across which the resultant combustion products are expanded. The expansion of the combustion products drives the turbine to rotate. The rotation of the turbine drives rotation of the compressor via a shaft. In some engines a fan, forward of the compressor, is also connected to the shaft via a gearing system.

The operations of a gas turbine engine, including compressor speeds, fan speeds, etc. depend on the specific operating conditions of the aircraft. By way of example, the fan speeds at take-off, climb, and altitude are varied because of the different requirements of each specific flight operation. Control of the engine operations is achieved via one or more general engine controllers, and is based off of multiple engine parameter inputs.

EP 3 139 143 A1 (prior art in the sense of Art. 54(3) EPC) discloses a gas turbine engine in accordance with the preamble of claim 1, and a method in accordance with the preamble of claim 9.

US 5 080 496 A discloses a method and apparatus for compensated temperature prediction. WO2014100081 A1 discloses a short inlet gas turbine engine.

### SUMMARY OF THE INVENTION

According to a first aspect of the present invention, there is provided a gas turbine engine as set forth in claim 1.

In an exemplary embodiment of the above described gas turbine engine the sensor is a temperature and a pressure sensor.

In another exemplary embodiment of any of the above described gas turbine engines the memory stores instructions for causing the processor to synthesize a gas turbine engine inlet pressure based on a pressure at the sensor.

In another exemplary embodiment of any of the above described gas turbine engines the sensor is mounted to a radially inward surface of a bypass duct.

In another exemplary embodiment of any of the above described gas turbine engines the sensor is mounted to a radially outward surface of a bypass duct.

In another exemplary embodiment of any of the above described gas turbine engines the sensor is mounted aft of a compressor inlet.

In another exemplary embodiment of any of the above described gas turbine engines the memory includes instructions for scheduling the gas turbine engine based on at least one of a temperature and a pressure at a location of the sensor.

In another exemplary embodiment of any of the above described gas turbine engines the sensor is aft of a bypass duct guide vane.

According to a further aspect of the present invention, there is provided a method as set forth in claim 9.

An example of the above described exemplary method for scheduling engine operations for a gas turbine engine synthesizing one of an inlet temperature and pressure of the gas turbine engine based on the received value includes synthesizing both an inlet temperature and an inlet pressure based on the received value.

In a further example of any of the above described exemplary methods for scheduling engine operations for a gas turbine engine the synthesized inlet temperature is a temperature of air at a gas turbine engine inlet forward of a fan section, relative to an expected direction of fluid flow through the gas turbine engine.

In a further example of any of the above described exemplary methods for scheduling engine operations for a gas turbine engine the synthesized inlet pressure is a pressure of air at a gas turbine engine inlet forward of a fan section, relative to an expected direction of fluid flow through the gas turbine engine.

In a further example of any of the above described exemplary methods for scheduling engine operations for a gas turbine engine synthesizing one of an inlet temperature and pressure includes accounting for at least one of an engine operational mode, an engine altitude and an engine fan speed by at least incorporating the one or more of the engine operational mode, the engine altitude and the engine fan speed as a variable in a synthesizing formula in a controller.

These and other features of the present invention can be best understood from the following specification and drawings, the following of which is a brief description.

### BRIEF DESCRIPTION OF THE DRAWINGS

Figure 1 schematically illustrates an exemplary gas turbine engine.
Figure 2 schematically illustrates a short inlet section of an exemplary gas turbine engine.

### DETAILED DESCRIPTION OF AN EMBODIMENT

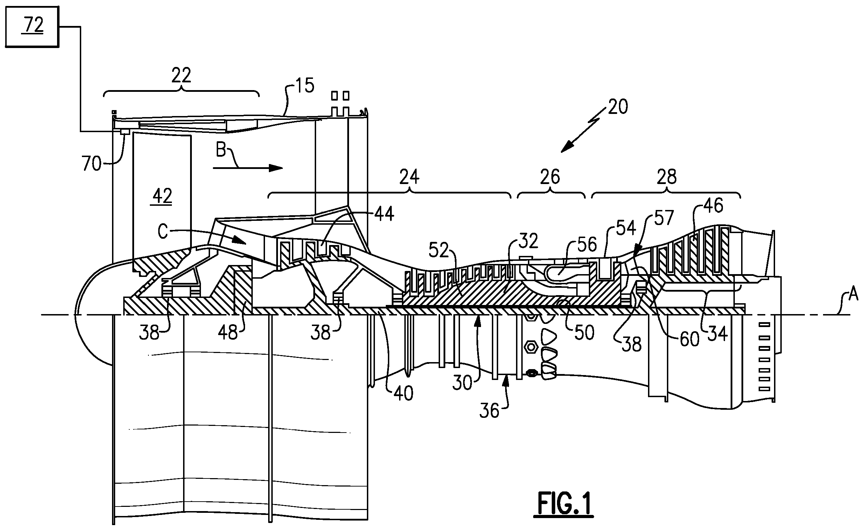

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

Low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5 (where °R = K x 9/5). The "Low corrected fan tip speed" as disclosed herein according to one non-limiting embodiment is less than about 1150 ft/second (350.5 m/s).

Conventional gas turbine engines include one or more general engine controllers that receive inputs from multiple engine sensors. The data provided from the engine sensors is then utilized by the controller to schedule engine performance, depending on the particular operating parameters of the engine. One such example is an inlet temperature sensor 70. The inlet temperature sensor 70 is typically positioned forward of the fan 42, on a radially inward facing surface 122 of the nacelle 120. The inlet temperature sensor 70 determines the temperature and pressure of air that is entering the gas turbine engine 20, and provides the determined values to a general engine controller 72. The general engine controller 72 then schedules engine operations based on the determined values, as well as other sensor measurements from the engine 20.

The inlet temperature sensor 70 is positioned sufficiently aft of the inlet that the air speed at the sensor location is reduced to tolerable levels. At the same time, the inlet temperature sensor 70 is positioned sufficiently forward of the fan that turbulence resulting from the rotation of the fan 42 does not meaningfully impact the sensor readings. These conflicting positional requirements generate an axial positioning window in which the inlet temperature sensor 70 can be suitably positioned. In certain gas turbine engines, such as short inlet gas turbine engines, the conflicting requirements of low airspeed and low turbulence result in a lack of suitable positions for the inlet temperature sensor forward of the fan 42 (i.e. the axial positioning window is either too short or non-existent).

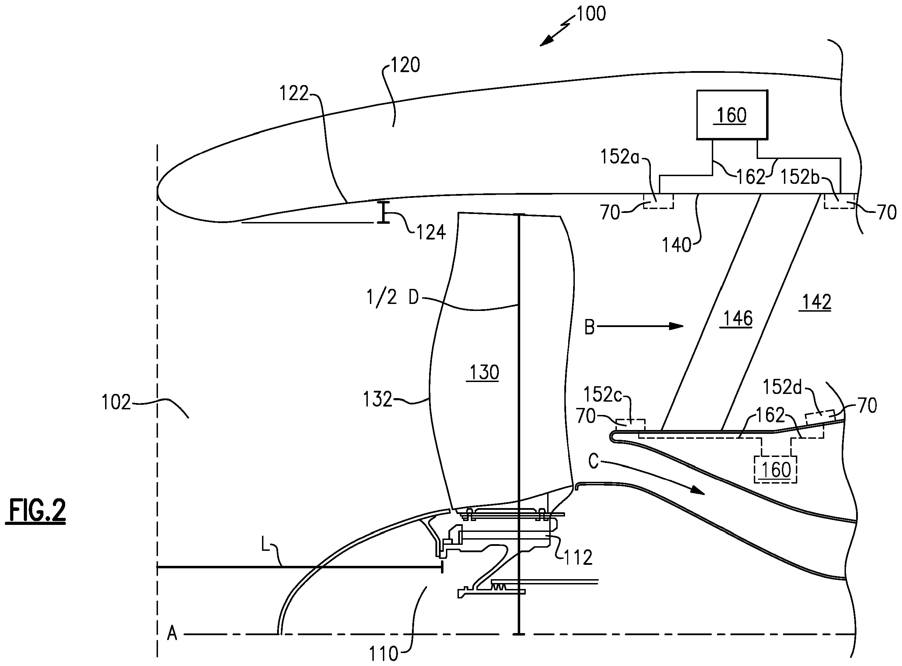

Figure 2 schematically illustrates a fan section 100 of an example gas turbine engine. The exemplary fan section 100 is a short inlet low pressure ratio fan section. A diameter of the fan has a dimension D (one half of dimension D is shown in Figure 2). The dimension D is based on a dimension of the fan blades 130. Each fan blade 130 has a leading edge 132. An inlet 102 is situated forward of the fan. A length of the inlet 102 has a dimension L between a location of the leading edge 132 of at least some of the fan blades 130 and a forward edge of the inlet 102. A dimensional relationship of L/D is between about 0.2 and about 0.45. In a further example, the engine has a high bypass ratio and the fan is a low pressure ratio fan having a pressure ratio between about 1.20 and about 1.50 at its cruise design point. As used herein, the term "short inlet" refers to any gas turbine engine inlet having the above described dimensional relationship of L/D of between about 0.2 and about 0.45.

The fan section 100 includes a radially outward fan nacelle 120. Multiple fan blades 130 protrude radially outward from a hub 110 to form the fan. The fan nacelle 120 includes a radially inward facing surface referred to as the inner diameter 122. The inner diameter of 122 of the fan nacelle 120 extends beyond the fan to form the outer diameter surface 140 of a bypass flowpath 142, alternately referred to as a bypass duct.

Aft of the fan 130, the flowpath is split between a primary engine flowpath C and a bypass flowpath B. A guide vane 146 structurally supports the inner and outer diameters of the bypass flowpath B, and maintains proper relative radial positions of the engine structures. In some examples, a bifurcation strut can be included downstream of the guide vane 146 and include pass throughs allowing signal wires, cooling passages, and the like, to pass through the bypass flowpath B from the inner diameter to the outer diameter, or vice versa. The guide vane 146 includes a flow correcting profile. The flow correcting vane or profile imparts desirable flow characteristics on the air passing through the bypass flowpath B.

As described above, the characteristics of a short inlet gas turbine engine render the region forward of the fan 130 unsuitable for including an inlet temperature sensor. As a result, the inlet temperature sensor 70 is located in one of four potential inlet temperature sensor positions 152a-d. The first sensor position 152a is forward of the guide vane 146 and on a radially outward surface of the bypass flowpath B. The second position 152b is aft of the guide vane 146 and on a radially outward surface of the bypass flowpath B. The third sensor position 152c is forward of the guide vane 146 and on a radially inward surface of the bypass flowpath B. The fourth sensor position 152d is aft of the guide vane 146 and on a radially inward surface of the bypass flowpath B. Each of the sensor positions 152a-d is connected to a general engine controller 160 via a communication line 162. The general engine controller 160 can be in either the illustrated position, or in any other position within the gas turbine engine 20. In some examples, the sensor position 152a-d is aft of the compressor inlet for the primary flowpath C. In yet further examples, the inlet temperature sensor 70 can be positioned on a surface of the bypass duct bifurcation, and operate in a similar faction as the four above described locations.

The inlet temperature sensor 70 detects a temperature and, in some examples, a pressure, of the fluid passing through the bypass flowpath B at the position 152a-d of the inlet temperature sensor. The rotation of the fan 130 affects the temperature and pressure of the air at each of the inlet sensor locations 152a-d. The specific effect on the temperature and pressure is dependent upon the rotational speed of the fan 130, the operating conditions of the engine, and any number of other knowable factors. Based on the known and knowable factors, as well as the sensed temperature, the controller 160 synthesizes a temperature value representative of the temperature at the inlet 102 of the gas turbine engine 20. In some examples the synthesizing of a temperature or pressure includes accounting for one or more operating condition variables, such as engine operational mode, engine altitude, current fan speed, and the like, by at least incorporating one or more operating condition variables in a synthetization process. The synthesized temperature is then utilized by the controller 160 to schedule engine operations.

In some examples, the temperature sensor also detects a pressure of the fluid passing through the bypass flowpath B at the location 152a-d of the sensor. The controller 160 can synthesize the pressure of the fluid at the inlet 102 of the gas turbine engine 20 in the same manner as the temperature is synthesized, and the synthesized pressure value is used by the controller 160 to schedule engine operations.

In alternative examples, the controller 160 is configured to schedule engine operations based directly on the bypass flowpath temperature, the bypass flowpath pressure, or both. In such an example, the controller 160 does not synthesize the inlet temperature and pressure, but rather directly uses the sensed conditions at the sensor locations 152a-d to schedule the engine operations.

With continued reference to Figures 1 and 2, in some examples the controller 160 schedules engine operations based on an aircraft-supplied temperature and pressure. In such examples, the temperature and/or pressure provided by the sensors 70 described herein are utilized as a backup source of inlet temperature and inlet pressure in case the controller 160 determines the sensors 70 to be fault.

While described above with specific regards to a short inlet gas turbine engine, one of skill in the art, having the benefit of this disclosure will understand that the inlet temperature sensor configurations described and illustrated herein can be applied to any gas turbine engine, and are not limited in application to a short inlet gas turbine engine.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a compressor (52);
a combustor (56) fluidly connected to the compressor (52) via a primary flowpath (C);
a turbine (54) fluidly connected to the combustor (56) via the primary flowpath (C); and
an engine controller (72; 160) communicatively coupled to at least one sensor (70) in the gas turbine engine (20), the controller (72; 160) including a non-transitory memory and a processor, and the at least one sensor (70) including an inlet temperature sensor (70), wherein the sensor (70) is disposed aft of a fan (42; 130), **characterised in that**:
the gas turbine engine (20) further comprises an inlet fan section defined by a dimensional relationship L/D of between 0.2 and 0.45, where L is a distance from an inlet to a leading edge of at least one fan blade and D is a diameter of the fan, and said memory stores instructions for causing said processor to synthesize a gas turbine engine inlet temperature based on a temperature at said sensor (70).

2. The gas turbine engine (20) of claim 1, wherein said sensor (70) is a temperature and a pressure sensor (70).

3. The gas turbine engine (20) of claim 2, wherein said memory stores instructions for causing said processor to synthesize a gas turbine engine inlet pressure based on a pressure at said sensor (70).

4. The gas turbine engine (20) of any preceding claim, wherein the sensor (70) is mounted to a radially inward surface of a bypass duct (142).

5. The gas turbine engine (20) of any of claims 1-3,
wherein the sensor (70) is mounted to a radially outward surface (140) of a bypass duct (142).

6. The gas turbine engine (20) of any preceding claim, wherein the sensor (70) is mounted aft of a compressor inlet (102).

7. The gas turbine engine (20) of any preceding claim, wherein said memory includes instructions for scheduling said gas turbine engine (20) based on at least one of a temperature and a pressure at a location of the sensor (70).

8. The gas turbine engine (20) of any preceding claim, wherein the sensor (70) is aft of a bypass duct guide vane (146).

9. A method for scheduling engine operations for a gas turbine engine (20) comprising:
receiving at least one of a temperature and a pressure value from a sensor (70) positioned aft of a fan (42; 130); and
scheduling engine operations based at least in part on the received at least one of the temperature and pressure value,
**characterised in that**:
the gas turbine engine (20) further comprises an inlet fan section defined by a dimensional relationship L/D of between 0.2 and 0.45, where L is a distance from an inlet to a leading edge of at least one fan blade and D is a diameter of the fan, and the method further comprises synthesizing at least one of an inlet temperature and inlet pressure of the gas turbine engine (20) based on the received value, and wherein scheduling engine operations based at least in part on the received one of the temperature and pressure value includes scheduling engine operations based on the synthesized one of the inlet temperature and inlet pressure.

10. The method of claim 9, wherein synthesizing one of an inlet temperature and inlet pressure of the gas turbine engine (20) based on the received value includes synthesizing both an inlet temperature and an inlet pressure based on the received value.

11. The method of claim 9 or 10, wherein the synthesized inlet temperature is a temperature of air at a gas turbine engine inlet (102) forward of a fan section (22), relative to an expected direction of fluid flow through the gas turbine engine (20).

12. The method of claim 11, wherein the synthesized inlet pressure is a pressure of air at a gas turbine engine inlet (102) forward of a fan section (122), relative to an expected direction of fluid flow through the gas turbine engine (20).

13. The method of any of claims 9 to 12, wherein synthesizing one of an inlet temperature and inlet pressure includes accounting for at least one of an engine operational mode, an engine altitude and an engine fan speed by at least incorporating the one or more of the engine operational mode, the engine altitude and the engine fan speed as a variable in a synthesizing formula in a controller (72; 160).

## Patentansprüche

1. Gasturbinentriebwerk (20), umfassend:
einen Verdichter (52);
eine Brennkammer (56), die über einen primären Strömungspfad (C) fluidisch mit dem Verdichter (52) verbunden ist;
eine Turbine (54), die über den primären Strömungspfad (C) fluidisch mit der Brennkammer (56) verbunden ist; und
eine Triebwerkssteuerung (72; 160), die kommunikativ an zumindest einen Sensor (70) in dem Gasturbinentriebwerk (20) gekoppelt ist, wobei die Steuerung (72; 160) einen nicht flüchtigen Speicher und einen Prozessor beinhaltet und der zumindest eine Sensor (70) einen Einlasstemperatursensor (70) beinhaltet, wobei der Sensor (70) hinter einem Gebläse (42; 130) angeordnet ist, **gekennzeichnet dadurch, dass**:
das Gasturbinentriebwerk (20) ferner einen Einlassgebläseteil umfasst, der durch eine Abmessungsbeziehung L/D zwischen 0,2 und 0,45 definiert ist, wobei L eine Entfernung von einem Einlass zu einer Vorderkante von zumindest einer Gebläseschaufel ist und D ein Durchmesser des Gebläses ist und auf dem Speicher Anweisungen zum Veranlassen des Prozessors, eine Gasturbinentriebwerkeinlasstemperatur auf Grundlage einer Temperatur an dem Sensor (70) zu synchronisieren, gespeichert sind.

2. Gasturbinentriebwerk (20) nach Anspruch 1, wobei der Sensor (70) ein Temperatur- und ein Drucksensor (70) ist.

3. Gasturbinentriebwerk (20) nach Anspruch 2, wobei auf dem Speicher Anweisungen zum Veranlassen des Prozessors, einen Gasturbineneinlassdruck auf Grundlage eines Drucks an dem Sensor (70) zu synchronisieren, gespeichert sind.

4. Gasturbinentriebwerk (20) nach einem der vorangehenden Ansprüche, wobei der Sensor (70) an einer radial inneren Fläche einer Umgehungsleitung (142) montiert ist.

5. Gasturbinentriebwerk (20) nach einem der Ansprüche 1-3, wobei der Sensor (70) an einer radial äußeren Fläche (140) der Umgehungsleitung (142) montiert ist.

6. Gasturbinentriebwerk (20) nach einem der vorangehenden Ansprüche, wobei der Sensor (70) hinter einem Verdichtereinlass (102) montiert ist.

7. Gasturbinentriebwerk (20) nach einem der vorangehenden Ansprüche, wobei der Speicher Anweisungen zum Planen des Gasturbinentriebwerks (20) auf Grundlage von zumindest einem von einer Temperatur und einem Druck an einer Lage des Sensors (70) beinhaltet.

8. Gasturbinentriebwerk (20) nach einem der vorangehenden Ansprüche, wobei sich der Sensor (70) hinter einer Umgehungskanalleitschaufel (146) befindet.

9. Verfahren zum Planen von Triebwerksvorgängen für ein Gasturbinentriebwerk (20), umfassend:
Empfangen von zumindest einem von einem Temperatur- und einem Druckwert von einem Sensor (70), der hinter einem Gebläse (42; 130) positioniert ist; und
Planen von Triebwerksvorgängen zumindest teilweise auf Grundlage des zumindest einen von dem Temperatur- und Druckwert,
**gekennzeichnet dadurch, dass**:
das Gasturbinentriebwerk (20) ferner einen Einlassgebläseteil umfasst, der durch eine Abmessungsbeziehung L/D zwischen 0,2 und 0,45 definiert ist, wobei L eine Entfernung von einem Einlass zu einer Vorderkante von zumindest einer Gebläseschaufel ist und D ein Durchmesser des Gebläses ist und das Verfahren ferner Synthetisieren von zumindest einem von einer Einlasstemperatur und einem Einlassdruck des Gasturbinentriebwerks (20) auf Grundlage des empfangenen Wertes umfasst und wobei das Planen von Triebwerksvorgängen zumindest teilweise auf Grundlage des empfangenen einen von dem Temperatur- und Druckwert Planen von Triebwerksvorgängen auf Grundlage des synthetisierten einen von der Einlasstemperatur und dem Einlassdruck beinhaltet.

10. Verfahren nach Anspruch 9, wobei das Synthetisieren von einem von einer Einlasstemperatur und einem Einlassdruck des Gasturbinentriebwerks (20) auf Grundlage des empfangenen Wertes Synthetisieren von sowohl einer Einlasstemperatur als auch einem Einlassdruck auf Grundlage des empfangenen Wertes beinhaltet.

11. Verfahren nach Anspruch 9 oder 10, wobei die synthetisierte Einlasstemperatur eine Temperatur von Luft an einem Gastriebwerkeinlass (102) vor einem Gebläseteil (22) bezogen auf eine erwartete Richtung eines Fluidstroms durch das Gasturbinentriebwerk (20) ist.

12. Verfahren nach Anspruch 11, wobei der synthetisierte Einlassdruck ein Druck von Luft an einem Gasturbinentriebwerk (102) vor einem Gebläseteil (122) bezogen auf eine erwartete Richtung eines Fluidstroms durch das Gasturbinentriebwerk (20) ist.

13. Verfahren nach einem der Ansprüche 9 bis 12, wobei das Synthetisieren von einem von einer Einlasstemperatur und einem Einlassdruck Berücksichtigen von zumindest einem von einem Triebwerksbetriebsmodus, einer Triebwerkshöhenlage und einer Triebwerksgebläsedrehzahl durch Integrieren von zumindest dem einen oder den mehreren von dem Triebwerksbetriebsmodus, der Triebwerkshöhenlage und der Triebwerksgebläsedrehzahl als eine Variable in einer Synthetisierungsformel in einer Steuerung (72; 160) beinhaltet.

## Revendications

1. Moteur à turbine à gaz (20) comprenant :
un compresseur (52) ;
une chambre de combustion (56) reliée fluidiquement au compresseur (52) par l'intermédiaire d'un trajet d'écoulement primaire (C) ;
une turbine (54) reliée fluidiquement à la chambre de combustion (56) par l'intermédiaire du trajet d'écoulement primaire (C) ; et
un dispositif de commande de moteur (72 ; 160) couplé en communication à au moins un capteur (70) dans le moteur à turbine à gaz (20), le dispositif de commande (72 ; 160) comportant une mémoire non transitoire et un processeur, et l'au moins un capteur (70) comportant un capteur de température d'admission (70), dans lequel le capteur (70) est disposé à l'arrière d'une soufflante (42 ; 130),
**caractérisé en ce que** :
le moteur à turbine à gaz (20) comprend en outre une section de soufflante d'admission définie par une relation dimensionnelle L/D comprise entre 0,2 et 0,45, où L est une distance depuis une admission vers un bord d'attaque d'au moins une aube de soufflante et D est un diamètre de la soufflante, et ladite mémoire stocke des instructions pour amener ledit processeur à synthétiser une température d'admission de moteur à turbine à gaz sur la base d'une température au niveau dudit capteur (70).

2. Moteur à turbine à gaz (20) selon la revendication 1, dans lequel ledit capteur (70) est un capteur de température et de pression (70).

3. Moteur à turbine à gaz (20) selon la revendication 2, dans lequel ladite mémoire stocke des instructions pour amener ledit processeur à synthétiser une pression d'admission de moteur à turbine à gaz sur la base d'une pression au niveau dudit capteur (70).

4. Moteur à turbine à gaz (20) selon une quelconque revendication précédente, dans lequel le capteur (70) est monté sur une surface radialement intérieure d'un conduit de dérivation (142).

5. Moteur à turbine à gaz (20) selon l'une quelconque des revendications 1 à 3, dans lequel le capteur (70) est monté sur une surface radialement extérieure (140) d'un conduit de dérivation (142).

6. Moteur à turbine à gaz (20) selon une quelconque revendication précédente, dans lequel le capteur (70) est monté à l'arrière d'une admission de compresseur (102).

7. Moteur à turbine à gaz (20) selon une quelconque revendication précédente, dans lequel ladite mémoire comporte des instructions pour programmer ledit moteur à turbine à gaz (20) sur la base d'au moins l'une d'une température et d'une pression au niveau d'un emplacement du capteur (70).

8. Moteur à turbine à gaz (20) selon une quelconque revendication précédente, dans lequel le capteur (70) est à l'arrière d'une aube de guidage (146) de conduit de dérivation.

9. Procédé pour programmer des opérations de moteur pour un moteur à turbine à gaz (20) comprenant :
la réception d'au moins l'une d'une valeur de température et de pression depuis un capteur (70) positionné à l'arrière d'une soufflante (42 ; 130) ; et
la programmation d'opérations de moteur sur la base au moins en partie de l'au moins une de la valeur de température et de pression reçue,
**caractérisé en ce que** :
le moteur à turbine à gaz (20) comprend en outre une section de soufflante d'admission définie par une relation dimensionnelle L/D comprise entre 0,2 et 0,45, où L est une distance depuis une admission vers un bord d'attaque d'au moins une aube de soufflante et D est un diamètre de la soufflante, et le procédé comprend en outre la synthétisation d'au moins l'une d'une température d'admission et d'une pression d'admission du moteur à turbine à gaz (20) sur la base de la valeur reçue, et dans lequel la programmation d'opérations de moteur sur la base au moins en partie de l'une de la valeur de température et de pression reçue comporte la programmation d'opérations de moteur sur la base de l'une de la température d'admission synthétisée et de la pression d'admission synthétisée.

10. Procédé selon la revendication 9, dans lequel la synthétisation de l'une d'une température d'admission et d'une pression d'admission du moteur à turbine à gaz (20) sur la base de la valeur reçue comporte la synthétisation à la fois d'une température d'admission et d'une pression d'admission sur la base de la valeur reçue.

11. Procédé selon la revendication 9 ou 10, dans lequel la température d'admission synthétisée est une température de l'air au niveau d'une admission de moteur à turbine à gaz (102) à l'avant d'une section de soufflante (22), par rapport à une direction prévue d'écoulement de fluide à travers le moteur à turbine à gaz (20).

12. Procédé selon la revendication 11, dans lequel la pression d'admission synthétisée est une pression de l'air au niveau d'une admission de moteur à turbine à gaz (102) à l'avant d'une section de soufflante (122), par rapport à une direction prévue d'écoulement de fluide à travers le moteur à turbine à gaz (20).

13. Procédé selon l'une quelconque des revendications 9 à 12, dans lequel la synthétisation de l'une d'une température d'admission et d'une pression d'admission comporte la prise en compte d'au moins l'un d'un mode de fonctionnement de moteur, d'une altitude de moteur et d'un régime de soufflante de moteur en incorporant au moins les un ou plusieurs du mode de fonctionnement de moteur, de l'altitude de moteur et du régime de soufflante de moteur en tant que variable dans une formule de synthétisation dans un dispositif de commande (72 ; 160).
